# EUROPÄISCHE PATENTSCHRIFT

(11) **EP 4 327 411 B1**
(45) Veröffentlichungstag und Bekanntmachung des Hinweises auf die Patenterteilung: **25.02.2026**
(21) Anmeldenummer: 22718990.9
(22) Anmeldetag: 01.04.2022
(51) Int. Cl.: H01R 4/34

(54) **VERBINDUNGSANORDNUNG, INSBESONDERE ZUR VERWENDUNG IN ELEKTROFAHRZEUGEN ODER HYBRIDFAHRZEUGEN**
CONNECTION ASSEMBLY, IN PARTICULAR FOR USE IN ELECTRIC VEHICLES OR HYBRID VEHICLES
ENSEMBLE DE RACCORDEMENT, EN PARTICULIER POUR UTILISATION DANS DES VÉHICULES ÉLECTRIQUES OU HYBRIDES

(30) Priorität: 20.04.2021 DE 102021203915
(43) Veröffentlichungstag der Anmeldung: 28.02.2024
(73) Patentinhaber: Robert Bosch GmbH, 70442 Stuttgart (DE)
(72) Erfinder: EBERLE-GOUBET, Klaus, 72108 Rottenburg-Hailfingen (DE); KOCH, Stefan, 72116 Moessingen (DE)
(86) Internationale Anmeldenummer: PCT/EP2022/058746
(87) Internationale Veröffentlichungsnummer: WO 2022/223264

(56) Entgegenhaltungen:
- DE-A1- 102016 106 620

## Beschreibung

### Stand der Technik

Die Erfindung betrifft eine Verbindungsanordnung, insbesondere zur Verwendung in Elektrofahrzeugen oder Hybridfahrzeugen, mit den Merkmalen des Oberbegriffs des unabhängigen Anspruchs 1.

In der Leistungselektronik, beispielsweise in Elektrofahrzeugen oder Hybridfahrzeugen, werden elektrische und/oder elektronische Bauteile, die hohe elektrische Ströme führen, miteinander verbunden. Aufgrund der hohen elektrischen Ströme müssen stromführende Elemente, durch die die elektrischen und/oder elektronischen Bauteile miteinander verbunden sind, entsprechend geringe elektrische Widerstände aufweisen und somit große Querschnitte und/oder Materialen hoher elektrischer Leitfähigkeit haben. So wird Strom in solchen Anordnungen beispielsweise über Stromschienen, die auch Busbars genannt werden, geführt und die elektrischen und/oder elektronischen Bauteile über Stromschienen miteinander verbunden.

Zur Verbindung von elektrischen und/oder elektronischen Bauteilen untereinander werden flächige Anschlusskontakte, beispielsweise Stromschienen oder Kabelschuhe, die elektrische Anschlüsse der elektrischen und/oder elektronischen Bauteile bilden, elektrisch miteinander verbunden. Dabei überlappen die flächigen Anschlusskontakte und sind in dem Bereich, in dem sie überlappen, miteinander verbunden, beispielsweise verschraubt. Fließen hohe Ströme über die Verbindung, ist die Einhaltung eines geringen elektrischen Materialwiderstandes und die Einhaltung eines geringen elektrischen Kontaktwiderstand zur Minimierung der elektrischen Gesamtverlustleitung essentiell.

### Offenbarung der Erfindung

Erfindungsgemäß wird eine Verbindungsanordnung, insbesondere zur Verwendung in Elektrofahrzeugen oder Hybridfahrzeugen, vorgeschlagen. Die Verbindungsanordnung umfasst einen ersten flächigen Anschlusskontakt zur elektrischen Kontaktierung eines ersten elektrischen und/oder elektronischen Bauteils und einen zweiten flächigen Anschlusskontakt zur elektrischen Kontaktierung eines zweiten elektrischen und/oder elektronischen Bauteils, wobei der erste flächige Anschlusskontakt und der zweite flächige Anschlusskontakt in einem Überlappbereich überlappen und in dem Überlappbereich flächig aufeinander aufliegen, wobei der erste flächige Anschlusskontakt und der zweite flächige Anschlusskontakt in dem Überlappbereich mittels eines Verbindungselements verbunden sind. Erfindungsgemäß ist zwischen dem Verbindungselement und dem ersten flächigen Anschlusskontakt eine Isolierschicht angeordnet, die den ersten flächigen Anschlusskontakt von dem Verbindungselement elektrisch isoliert und zwischen dem Verbindungselement und dem zweiten flächigen Anschlusskontakt ist eine Isolierschicht angeordnet, die den zweiten flächigen Anschlusskontakt von dem Verbindungselement elektrisch isoliert.

### Vorteile der Erfindung

Gegenüber dem Stand der Technik weist die Verbindungsanordnung mit den Merkmalen des unabhängigen Anspruchs den Vorteil auf, dass das Verbindungsmittel elektrochemisch von den flächigen Anschlusskontakten isoliert ist. Somit wird die Gefahr von Korrosion vorteilhaft reduziert und gleichzeitig eine gute und stabile Verbindung zwischen dem ersten flächigen Anschlusskontakt und dem zweiten flächigen Anschlusskontakt über die gesamte Lebensdauer der Verbindungsanordnung sichergestellt. Weiterhin wird eine gute Verbindung mit geringem Vorspannungsverlust durch Setz- oder Kriechverhalten sichergestellt. Weitere vorteilhafte Ausgestaltungen und Weiterbildungen der Erfindungen werden durch die in den Unteransprüchen angegebenen Merkmale ermöglicht.

Gemäß einem vorteilhaften Ausführungsbeispiel ist vorgesehen, dass die Isolierschicht an dem Verbindungselement und/oder an dem ersten flächigen Anschlusskontakt und/oder an dem zweiten flächigen Anschlusskontakt ausgebildet ist. Die Isolierschicht kann dabei beispielsweise vorteilhaft als Beschichtung an dem Verbindungselement und/oder an dem ersten flächigen Anschlusskontakt und/oder an dem zweiten flächigen Anschlusskontakt ausgebildet sein. So kann die Isolierschicht beispielsweise stoffschlüssig an dem Verbindungselement und/oder an dem ersten flächigen Anschlusskontakt und/oder an dem zweiten flächigen Anschlusskontakt ausgebildet sein.

Gemäß einem vorteilhaften Ausführungsbeispiel ist vorgesehen, dass die Isolierschicht aus einem Silikat und/oder einem Phosphat und/oder einem Nitrid und/oder einem Oxid ausgebildet ist. Eine derart ausgebildete Isolierschicht trennt das Verbindungselement besonders gut elektrochemisch von den flächigen Anschlusskontakten. Somit wird die Gefahr von Korrosion vorteilhaft reduziert und gleichzeitig eine gute und stabile Verbindung zwischen dem ersten flächigen Anschlusskontakt und dem zweiten flächigen Anschlusskontakt über die gesamte Lebensdauer der Verbindungsanordnung sichergestellt.

Gemäß einem vorteilhaften Ausführungsbeispiel ist vorgesehen, dass das Verbindungselement durch eine erste Ausnehmung in dem ersten flächigen Anschlusskontakt und durch eine zweite Ausnehmung in dem zweiten flächigen Anschlusskontakt hindurchragt, wobei die Isolierschicht um die erste Ausnehmung herum und/oder um die zweite Ausnehmung herum angeordnet ist. Durch ein derart ausgebildetes Verbindungselement kann ein vorteilhaft stabiler und guter elektrischer Kontakt zwischen den beiden Anschlusskontakten hergestellt werden. Das Verbindungselement liegt beispielsweise um die Ausnehmung herum mittelbar unter Zwischenlage der Isolierschicht an den Anschlusskontakten an. Die Isolierschicht trennt somit das Verbindungsmittel von den Anschlusskontakten und isoliert es elektrisch von den Anschlusskontakten. Somit wird ein Stromfluss zwischen dem Verbindungselement und den Anschlusskontakten verhindert und somit galvanische Korrosion in dem Bereich, in dem das Verbindungsmittel mittelbar an den Anschlusskontakten anliegt, vorgebeugt.

Gemäß einem vorteilhaften Ausführungsbeispiel ist vorgesehen, dass das Verbindungselement als Schraubverbindungselement mit einer Schraube und insbesondere mit einer Schraubbuchse und/oder einer Unterlegscheibe ausgebildet ist. Die Schraubbuchse kann beispielsweise eine Schraubenmutter sein. Dabei kann die Isolierschicht zwischen einem Kopf der Schraube und den flächigen Anschlusskontakten angeordnet sein und/oder die Isolierschicht kann zwischen der Schraubbuchse und Unterlegscheibe und den flächigen Anschlusskontakten angeordnet sein. Die Anschlusskontakte können durch eine Schraubverbindung vorteilhaft einfach, fest und wieder lösbar miteinander verbunden werden. Die Schraubverbindung drückt dabei die Anschlusskontakte in dem Überlappbereich vorteilhaft aufeinander, so dass die Anschlusskontakte in dem Überlappbereich elektrisch miteinander verbunden sind. Die Schraubverbindung umfasst vorteilhaft eine Schraube mit einem Kopf und eine Schraubbuchse. Die Schraubbuchse kann beispielsweise eine Schraubenmutter sein. Der Kopf der Schraube liegt mittelbar, unter Zwischenlage der Isolierschicht an dem ersten Anschlusskontakt an. Die Schraubbuchse liegt mittelbar unter Zwischenlage der Isolationsschicht an dem zweiten Anschlusskontakt an. Weiterhin kann zwischen dem Kopf der Schraube und dem ersten Anschlusskontakt und/oder zwischen der Schraubbuchse und dem zweiten Anschlusskontakt eine Unterlegscheibe angeordnet sein.

Gemäß einem vorteilhaften Ausführungsbeispiel ist vorgesehen, dass das Verbindungselement komplett von der Isolationsschicht überzogen ist. So wird auf einfache Weise sichergestellt, dass das Verbindungselement an allen Stellen, an denen es in elektrisch leitenden Kontakt mit den Anschlusselementen kommen könnte, durch die Isolierschicht von den Anschlusselementen elektrisch isoliert ist. Weiterhin ist das von der Isolationsschicht vollständig umgebene Verbindungselement elektrisch von Elektrolyten, beispielsweise Wasser mit gelösten Salzen, isoliert.

Gemäß einem vorteilhaften Ausführungsbeispiel ist vorgesehen, dass der erste flächige Anschlusskontakt und/oder der zweite flächige Anschlusskontakt aus Kupfer ausgebildet sind.

Gemäß einem vorteilhaften Ausführungsbeispiel ist vorgesehen, dass das Verbindungselement aus Stahl ausgebildet ist.

Gemäß einem vorteilhaften Ausführungsbeispiel ist vorgesehen, dass der erste flächige Anschlusskontakt als Stromschiene oder als Kabelschuh ausgebildet ist und/oder der zweite flächige Anschlusskontakt als Stromschiene oder als Kabelschuh ausgebildet ist.

Weiterhin erfindungsgemäß wird eine elektrische und/oder elektronische Baugruppe umfassend eine erfindungsgemäße Verbindungsanordnung vorgeschlagen. Die elektrische und/oder elektronische Baugruppe umfasst weiterhin ein erstes elektrisches und/oder elektronisches Bauteil und ein zweites elektrisches und/oder elektronisches Bauteil, wobei der erste flächige Anschlusskontakt als elektrischer Anschluss des ersten elektrischen und/oder elektronischen Bauteils ausgebildet ist und der zweite flächige Anschlusskontakt als elektrischer Anschluss des zweiten elektrischen und/oder elektronischen Bauteils ausgebildet ist.

### Kurze Beschreibung der Zeichnungen

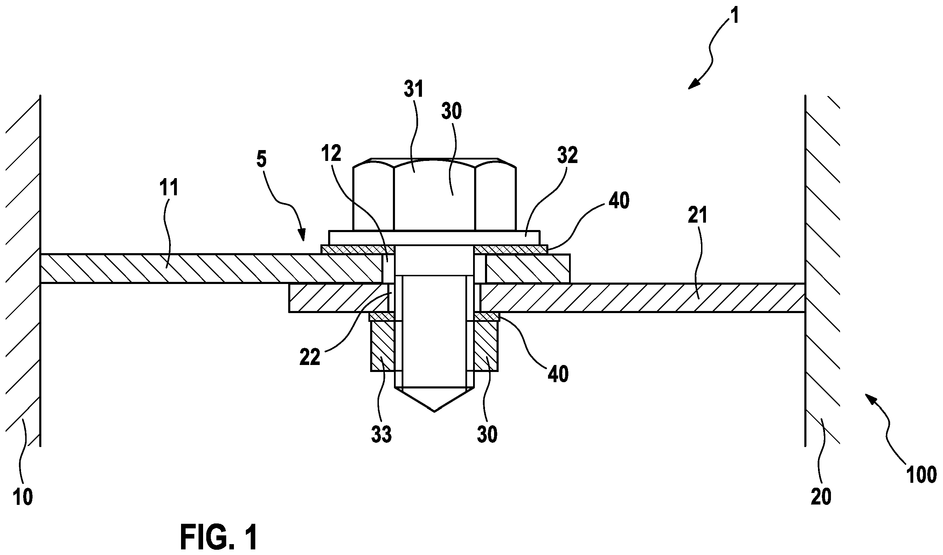

Ein Ausführungsbeispiel der Erfindung ist in der Zeichnung dargestellt und wird in der nachfolgenden Beschreibung näher erläutert. Es zeigt
Fig. 1 einen Querschnitt durch ein Ausführungsbeispiel der erfindungsgemäßen Verbindungsanordnung.

### Ausführungsformen der Erfindung

Fig. 1 zeigt eine schematische Ansicht auf ein Ausführungsbeispiel der elektrischen und/oder elektronischen Baugruppe 100 mit einem Ausführungsbeispiel der Verbindungsanordnung 1. Die Verbindungsanordnung 1 kann bei allen Anwendungen, bei denen hohe Ströme über Kontaktverbindungen geführt und Leistungsverluste gering gehalten werden müssen, zum Einsatz kommen. Die Verbindungsanordnung 1 kann beispielsweise in Systemen, die hohe Ströme führen, beispielsweise in der Leistungselektronik, beispielsweise in Elektrofahrzeugen oder Hybridfahrzeugen eingesetzt werden. Beispielsweise kann die Verbindungsanordnung 1 in der Leistungselektronik, bei Wandlern oder Batterien eingesetzt werden.

Die Verbindungsanordnung 1 umfasst einen ersten flächiger Anschlusskontakt 11, der beispielsweise ein elektrischer Anschluss eines ersten elektrischen und/oder elektronischen Bauteils 10 sein kann. Weiterhin umfasst die Verbindungsanordnung 1 einen zweiten flächiger Anschlusskontakt 21, der beispielsweise ein elektrischer Anschluss eines zweiten elektrischen und/oder elektronischen Bauteils 20 sein kann. Die elektrischen und/oder elektronischen Bauteile 10, 20 können beispielsweise Inverter, Umrichter, DC/DC-Wandler, Kondensatoren, wie beispielsweise Zwischenkreiskondensatoren, Batterien oder beispielsweise auch andere elektronische und/oder elektrische Bauteile, die in Elektrofahrzeugen oder Hybridfahrzeugen Anwendung finden, sein oder umfassen.

Das erste elektrische und/oder elektronische Bauteil 10 ist mit dem zweiten elektrischen und/oder elektronischen Bauteil 20 elektrisch leitend verbunden. Die elektrisch leitende Verbindung zwischen dem ersten elektrischen und/oder elektronischen Bauteil 10 mit dem zweiten elektrischen und/oder elektronischen Bauteil 20 ist über die flächigen Anschlusskontakte 11, 21 hergestellt. Dazu ist der erste flächige Anschlusskontakt 11 mit dem zweiten flächigen Anschlusskontakt 21 elektrisch leitend verbunden. Dazu liegt der erste flächige Anschlusskontakt 11 flächig, insbesondere direkt, auf dem zweiten flächigen Anschlusskontakt 21 auf.

Die flächigen Anschlusskontakte 11, 21 sind aus einem elektrisch leitfähigen Material, beispielsweise aus einem Metall, beispielsweise aus Kupfer, ausgebildet. Kupfer weist einen vorteilhaft geringen Materialwiderstand auf. Der erste flächige Anschlusskontakt 11 kann aus dem gleichen Material wie der zweite flächige Anschlusskontakt 21 ausgebildet sein. Der erste flächige Anschlusskontakt 11 und der zweite flächige Anschlusskontakt 21 können aber auch aus unterschiedlichen Materialien ausgebildet sein. Die flächigen Anschlusskontakte 11, 21 sind, zumindest in dem Bereich, in dem sie überlappen, flächig ausgebildet. Die flächigen Anschlusskontakte 11, 21 weisen in dem Überlappungsbereich 5 ebene Auflageflächen auf, an denen die flächigen Anschlusskontakte 11, 21 aneinander anliegen, so dass eine elektrisch leitende Verbindung zwischen den flächigen Anschlusskontakten 11, 21 hergestellt ist. Die flächigen Anschlusskontakte 11, 21 sind bezüglich ihrer flächigen Erstreckungsebenen planparallel zueinander angeordnet. In dem in Fig. 1 dargestellten Ausführungsbeispiel sind die flächigen Anschlusskontakte 11, 21 als Stromschienen 11, 21 ausgebildet. Unter einer Stromschiene 11, 21 wird im Kontext der vorliegenden Anmeldung ein elektrisch leitender flächiger Leiter, beispielsweise eine elektrisch leitende Leiste oder ein elektrisch leitender Streifen, verstanden. In Fig. 1 ist ein Querschnitt senkrecht zur flächigen Erstreckungsebene der Stromschienen 11, 21 dargestellt. Eine Stromschiene kann somit beispielsweise eine Busbar sein. Die Stromschienen 11, 21 können beispielsweise gebogen oder gekrümmt sein oder auch kurven- oder stufenartig verlaufen. Die Stromschienen 11, 21 sind aus einem elektrisch leitenden Material, beispielsweise aus einem Metall wie beispielsweise Kupfer, gefertigt. Die Stromschienen 11, 21 sind beispielsweise einstückig ausgebildet. Die Stromschienen 11,21 sind beispielsweise durchgehend aus dem gleichen Material ausgebildet. Die Stromschienen 11,21 sind beispielsweise als Stanzteile ausgebildet. In dem in der Figur dargestellten Ausführungsbeispiel weist jede der Stromschienen 11, 21 eine über eine Längserstreckung der Stromschienen 11, 21 beispielsweise senkrecht zur Stromrichtung konstante Dicke der Stromschiene 11, 21 auf. Weiterhin weist in dem in der Figur dargestellten Ausführungsbeispiel jede der Stromschienen 11, 21 eine über eine Längserstreckung der Stromschienen 11, 21 beispielsweise senkrecht zur Stromrichtung konstante Breite der Stromschiene 11, 21 auf. Weiterhin können die Anschlusskontakte 11, 21 beispielsweise auch als Kabelschuhe ausgebildet sein.

Wie in Fig. 1 dargestellt, umfasst die Verbindungsanordnung 1 weiterhin ein Verbindungselement 30. Das Verbindungselement 30 stellt eine mechanische Verbindung zwischen dem ersten flächigen Anschlusskontakt 11 und dem zweiten flächigen Anschlusskontakt 21 her. In dem in Fig. 1 dargestellten Ausführungsbeispiel ist das Verbindungselement 30 als Schraubverbindungselement ausgebildet. Das Verbindungselement 30 umfasst beispielsweise eine Schraube 31 und eine Schraubbuchse 33. Die Schraubbuchse 33 ist beispielsweise als Schraubmutter ausgebildet. Die Schraube 31 ist in dem Überlappbereich 5, in dem die Anschlusskontakte 11, 21 überlappen, durch die Anschlusskontakte 11, 21 hindurchgeführt. Dazu ist in dem ersten flächigen Anschlusskontakt 11 eine erste Ausnehmung 12 ausgebildet und in dem zweiten flächigen Anschlusskontakt 21 eine zweite Ausnehmung 22 ausgebildet. Die Schraube 31 ragt durch die erste Ausnehmung 12 des ersten flächigen Anschlusskontaktes 11 und durch die zweite Ausnehmung 22 des zweiten flächigen Anschlusskontaktes 21 hindurch. Die Schraube 31 ist in den Ausnehmungen 12, 22 von dem ersten flächigen Anschlusskontakt 11 und von dem zweiten flächigen Anschlusskontakt 21 beabstandet und berührt diese nicht. An einem ersten Ende der Schraube 31 ist ein Kopf ausgebildet. An dem von dem ersten Ende der Schraube 31 abgewandten zweiten Ende der Schraube 31 ist eine Schraubbuchse 33 auf ein Gewinde der Schraube 31 aufgeschraubt. Die Schraube 31 und die Schraubbuchse 33 drücken somit den ersten flächigen Anschlusskontakt 11 und den zweiten flächigen Anschlusskontakt 21 aufeinander. Dabei liegt der erste flächige Anschlusskontakt 11 flächig direkt auf dem zweiten flächigen Anschlusskontakt 21 auf, so dass eine elektrisch leitende Verbindung zwischen den beiden Anschlusskontakten 11, 21 hergestellt ist. Wie in dem in Fig. 1 dargestellten Ausführungsbeispiel kann das Verbindungselement 30 zusätzlich zur Schraube 31 und zur Schraubbuchse 33 eine oder mehrere Unterlegscheiben 32 umfassen, die beispielsweise unter den Kopf der Schraube 31 oder unter die Schraubbuchse 33 untergelegt sein können. Das Verbindungselement 30 kann beispielsweise aus einem Metall, beispielsweise aus Stahl gefertigt sein. Stahl weist ein vorteilhaft hohes E-Model auf.

Das Verbindungselement 30 ist aus einem anderen Material als der erste flächige Anschlusskontakt 11 und/oder der zweite flächige Anschlusskontakt 21 ausgebildet. Bauelemente aus unterschiedlichen Materialien, die in elektrisch leitenden Kontakt stehen, können in einem flüssigen Medium zu Elektroden werden. Dabei wirkt das flüssige Medium, beispielsweise Wasser mit darin gelösten Salzen, als Elektrolyt. Es findet eine elektrochemische Reaktion statt, die zur Korrosion der Verbindungsanordnung 1 führen kann. Um die Korrosion zu verhindern wird in der in Fig. 1 dargestellten Verbindungsanordnung 1 der elektrische Kontakt zwischen den flächigen Anschlusskontakten 11, 21 und dem aus einem anderen Werkstoff als die flächigen Anschlusskontakte 11, 21 ausgebildeten Verbindungselement 30 unterbunden. Dazu umfasst die die Verbindungsanordnung 1 eine wenigstens eine Isolierschicht 40. Die Isolierschicht 40 ist zwischen den Anschlusskontakten 11, 21 und dem Verbindungselement 30 angeordnet und isoliert die Anschlusselemente 11, 21 elektrisch von dem Verbindungselement 30. Die Isolierschicht 40 kann beispielsweise ein Phosphat und/oder ein Silikat und/oder ein Nitrid und/oder ein Oxid umfassen. Die Isolierschicht 40 kann beispielsweise eine durchgehend zusammenhängende Schicht sein. Die Isolierschicht 40 kann aber auch eine in mehrere voneinander getrennte Bereiche unterteilte Isolierschicht 40 sein. Die Isolierschicht 40 kann auch mehrere übereinander angeordnete Schichten umfassen. Die Verbindungsanordnung 1 kann auch mehrere Isolierschichten 40 umfassen. Die Isolierschichten 40 können beispielsweise mittels Physical Vapor Deposition (PVD), Chemical Vapor Deposition (CVD), Sputtern, außenstromloser Abscheidung, Tauchbeschichten oder Sprühbeschichtung auf den ersten flächigen Anschlusskontakt 11 und/oder auf den zweiten flächigen Anschlusskontakt 21 und/oder auf das Verbindungselement 30 aufgebracht werden.

Dabei kann die Isolierschicht 40 beispielsweise lokal auf dem ersten flächigen Anschlusskontakt 11 und/oder auf dem zweiten flächigen Anschlusskontakt 21 und/oder auf dem Verbindungselement 30 aufgebracht sein. Ist das Verbindungselement 30, wie in dem in Fig. 1 dargestellten Ausführungsbeispiel, als Schraubverbindungselement ausgebildet, so kann die Isolierschicht 40 beispielsweise an dem Kopf der Schraube 31, der Schraubbuchse 33 und/oder der Unterlegscheibe 32 angeordnet und/oder aufgebracht sein. Dabei kann die Isolierschicht 40 lokal begrenzt auf der Schraube 31, der Schraubbuchse 33 und/oder der Unterlegscheibe 32 angeordnet und/oder aufgebracht sein. Die Isolierschicht 40 kann aber auch die Schraube 31 und/oder die Schraubbuchse 33 und/oder die Unterlegscheibe 32 komplett überziehen.

Selbstverständlich sind auch weitere Ausführungsbeispiele und Mischformen der dargestellten Ausführungsbeispiele möglich.

## Patentansprüche

1. Verbindungsanordnung (1), insbesondere zur Verwendung in Elektrofahrzeugen oder Hybridfahrzeugen, umfassend einen ersten flächigen Anschlusskontakt (11) zur elektrischen Kontaktierung eines ersten elektrischen und/oder elektronischen Bauteils (10) und einen zweiten flächigen Anschlusskontakt (21) zur elektrischen Kontaktierung eines zweiten elektrischen und/oder elektronischen Bauteils (20), wobei der erste flächige Anschlusskontakt (11) und der zweite flächige Anschlusskontakt (21) in einem Überlappbereich (5) überlappen und in dem Überlappbereich (5) flächig aufeinander aufliegen, wobei der erste flächige Anschlusskontakt (11) und der zweite flächige Anschlusskontakt (21) in dem Überlappbereich (5) mittels eines Verbindungselements (30) verbunden sind, wobei zwischen dem Verbindungselement (30) und dem ersten flächigen Anschlusskontakt (11) eine Isolierschicht (40) angeordnet ist, die den ersten flächigen Anschlusskontakt (11) von dem Verbindungselement (30) elektrisch isoliert, **dadurch gekennzeichnet, dass** zwischen dem Verbindungselement (30) und dem zweiten flächigen Anschlusskontakt (21) eine Isolierschicht (40) angeordnet ist, die den zweiten flächigen Anschlusskontakt (21) von dem Verbindungselement (30) elektrisch isoliert.

2. Verbindungsanordnung nach Anspruch 1, **dadurch gekennzeichnet, dass** die Isolierschicht (40) an dem Verbindungselement (30) und/oder an dem ersten flächigen Anschlusskontakt (11) und/oder an dem zweiten flächigen Anschlusskontakt (21) ausgebildet ist.

3. Verbindungsanordnung nach einem der vorhergehenden Ansprüche, **dadurch gekennzeichnet, dass** die Isolierschicht (40) aus einem Silikat und/oder einem Phosphat und/oder einem Nitrid und/oder einem Oxid ausgebildet ist.

4. Verbindungsanordnung nach einem der vorhergehenden Ansprüche, **dadurch gekennzeichnet, dass** das Verbindungselement (30) durch eine erste Ausnehmung (12) in dem ersten flächigen Anschlusskontakt (11) und durch eine zweite Ausnehmung (22) in dem zweiten flächigen Anschlusskontakt (21) hindurchragt, wobei die Isolierschicht (40) um die erste Ausnehmung (12) herum und/oder um die zweite Ausnehmung (22) herum angeordnet ist.

5. Verbindungsanordnung nach einem der vorhergehenden Ansprüche, **dadurch gekennzeichnet, dass** das Verbindungselement (30) als Schraubverbindung mit einer Schraube (31) und insbesondere mit einer Schraubbuchse (33) und/oder einer Unterlegscheibe (32) ausgebildet ist, wobei die Isolierschicht (40) zwischen einem Kopf der Schraube (31) und den flächigen Anschlusskontakten (11, 21) angeordnet ist und/oder die Isolierschicht (40) zwischen der Unterlegscheibe (32) und den flächigen Anschlusskontakten (11, 21) angeordnet ist und/oder die Isolierschicht (40) zwischen der Schraubbuchse (33) und den flächigen Anschlusskontakten (11, 21) angeordnet ist.

6. Verbindungsanordnung nach einem der vorhergehenden Ansprüche, **dadurch gekennzeichnet, dass** das Verbindungselement (30) komplett von der Isolationsschicht (40) überzogen ist.

7. Verbindungsanordnung nach einem der vorhergehenden Ansprüche, **dadurch gekennzeichnet, dass** der erste flächige Anschlusskontakt (11) und/oder der zweite flächige Anschlusskontakt (21) aus Kupfer ausgebildet sind.

8. Verbindungsanordnung nach einem der vorhergehenden Ansprüche, **dadurch gekennzeichnet, dass** das Verbindungselement (30) aus Stahl ausgebildet ist.

9. Verbindungsanordnung nach einem der vorhergehenden Ansprüche, **dadurch gekennzeichnet, dass** der erste flächige Anschlusskontakt (11) als Stromschiene oder als Kabelschuh ausgebildet ist und/oder der zweite flächige Anschlusskontakt (21) als Stromschiene oder als Kabelschuh ausgebildet ist.

10. Elektrische und/oder elektronische Baugruppe (100) umfassend eine Verbindungsanordnung (1) nach einem der vorhergehenden Ansprüche, **dadurch gekennzeichnet, dass** die elektrische und/oder elektronische Baugruppe (100) weiterhin ein erstes elektrisches und/oder elektronisches Bauteil (10) und ein zweites elektrisches und/oder elektronisches Bauteil (20) umfasst, wobei der erste flächige Anschlusskontakt (11) als elektrischer Anschluss des ersten elektrischen und/oder elektronischen Bauteils (10) ausgebildet ist und der zweite flächige Anschlusskontakt (21) als elektrischer Anschluss des zweiten elektrischen und/oder elektronischen Bauteils (20) ausgebildet ist.

## Claims

1. Connecting arrangement (1), in particular for use in electric vehicles or hybrid vehicles, comprising a first areal connection contact (11) for electrical contacting of a first electrical and/or electronic component (10), and comprising a second areal connection contact (21) for electrical contacting of a second electrical and/or electronic component (20), wherein the first areal connection contact (11) and the second areal connection contact (21) overlap in an overlap region (5) and bear areally on one another in the overlap region (5), wherein the first areal connection contact (11) and the second areal connection contact (21) are connected in the overlapping region (5) by means of a connecting element (30),
wherein, between the connecting element (30) and the first areal connection contact (11), there is arranged an insulating layer (40) which electrically insulates the first areal connection contact (11) from the connecting element (30), **characterized in that**, between the connecting element (30) and the second areal connection contact (21), there is arranged an insulating layer (40) which electrically insulates the second areal connection contact (21) from the connecting element (30).

2. Connecting arrangement according to Claim 1, **characterized in that** the insulating layer (40) is formed on the connecting element (30) and/or on the first areal connection contact (11) and/or on the second areal connection contact (21).

3. Connecting arrangement according to either of the preceding claims, **characterized in that** the insulating layer (40) is formed from a silicate and/or a phosphate and/or a nitride and/or an oxide.

4. Connecting arrangement according to one of the preceding claims, **characterized in that** the connecting element (30) projects through a first cutout (12) in the first areal connection contact (11) and through a second cutout (22) in the second areal connection contact (21), wherein the insulating layer (40) is arranged around the first cutout (12) and/or around the second cutout (22).

5. Connecting arrangement according to one of the preceding claims, **characterized in that** the connecting element (30) is in the form of a screw connection with a screw (31) and in particular with a screw bushing (33) and/or with a washer (32), wherein the insulating layer (40) is arranged between a head of the screw (31) and the areal connection contacts (11, 21) and/or the insulating layer (40) is arranged between the washer (32) and the areal connection contacts (11, 21) and/or the insulating layer (40) is arranged between the screw bushing (33) and the areal connection contacts (11, 21).

6. Connecting arrangement according to one of the preceding claims, **characterized in that** the connecting element (30) is covered completely by the insulating layer (40).

7. Connecting arrangement according to one of the preceding claims, **characterized in that** the first areal connection contact (11) and/or the second areal connection contact (21) are/is formed from copper.

8. Connecting arrangement according to one of the preceding claims, **characterized in that** the connecting element (30) is formed from steel.

9. Connecting arrangement according to one of the preceding claims, **characterized in that** the first areal connection contact (11) is in the form of a conductor bar or cable lug and/or the second areal connection contact (21) is in the form of a conductor bar or cable lug.

10. Electrical and/or electronic assembly (100) comprising a connecting arrangement (1) according to one of the preceding claims, **characterized in that** the electrical and/or electronic assembly (100) further comprises a first electrical and/or electronic component (10) and a second electrical and/or electronic component (20), wherein the first areal connection contact (11) is in the form of an electrical connection of the first electrical and/or electronic component (10) and the second areal connection contact (21) is in the form of an electrical connection of the second electrical and/or electronic component (20).

## Revendications

1. Ensemble de raccordement (1), destiné en particulier à être utilisé dans des véhicules électriques ou hybrides, comprenant un premier contact de connexion plat (11) destiné à établir un contact électrique avec un premier composant électrique et/ou électronique (10) et un deuxième contact de connexion plat (21) destiné à établir un contact électrique avec un deuxième composant électrique et/ou électronique (20), le premier contact de connexion plat (11) et le deuxième contact de connexion plat (21) se chevauchant dans une zone de chevauchement (5) et reposant l'un sur l'autre à plat dans la zone de chevauchement (5), le premier contact de connexion plat (11) et le deuxième contact de connexion plat (21) étant reliés dans la zone de chevauchement (5) au moyen d'un élément de raccordement (30),
une couche isolante (40) étant disposée entre l'élément de raccordement (30) et le premier contact de connexion plat (11), laquelle isole électriquement le premier contact de connexion plat (11) de l'élément de raccordement (30), **caractérisé en ce qu'**une couche isolante (40) est disposée entre l'élément de raccordement (30) et le deuxième contact de connexion plat (21), laquelle isole électriquement le deuxième contact de connexion plat (21) de l'élément de raccordement (30).

2. Ensemble de raccordement selon la revendication 1, **caractérisé en ce que** la couche isolante (40) est formée sur l'élément de raccordement (30) et/ou sur le premier contact de connexion plat (11) et/ou sur le deuxième contact de connexion plat (21).

3. Ensemble de raccordement selon l'une des revendications précédentes, **caractérisé en ce que** la couche isolante (40) est formée à partir d'un silicate et/ou d'un phosphate et/ou d'un nitrure et/ou d'un oxyde.

4. Ensemble de raccordement selon l'une des revendications précédentes, **caractérisé en ce que** l'élément de raccordement (30) fait saillie à travers un premier évidement (12) dans le premier contact de connexion plat (11) et à travers un deuxième évidement (22) dans le deuxième contact de connexion plat (21), la couche isolante (40) étant disposée autour du premier évidement (12) et/ou autour du deuxième évidement (22).

5. Ensemble de raccordement selon l'une des revendications précédentes, **caractérisé en ce que** l'élément de raccordement (30) est formé comme un raccordement à vissage avec une vis (31) et en particulier avec une douille de vissage (33) et/ou une rondelle (32), la couche isolante (40) étant disposée entre une tête de la vis (31) et les contacts de raccordement plats (11, 21) et/ou la couche isolante (40) étant disposée entre la rondelle (32) et les contacts de raccordement plats (11, 21) et/ou la couche isolante (40) étant disposée entre la douille de vissage (33) et les contacts de connexion plats (11, 21).

6. Ensemble de raccordement selon l'une des revendications précédentes, **caractérisé en ce que** l'élément de raccordement (30) est entièrement recouvert de la couche isolante (40).

7. Ensemble de raccordement selon l'une des revendications précédentes, **caractérisé en ce que** le premier contact de connexion plat (11) et/ou le deuxième contact de connexion plat (21) sont formés à partir de cuivre.

8. Ensemble de raccordement selon l'une des revendications précédentes, **caractérisé en ce que** l'élément de raccordement (30) est formé à partir d'acier.

9. Ensemble de raccordement selon l'une des revendications précédentes, **caractérisé en ce que** le premier contact de connexion plat (11) est formé comme une barre omnibus ou comme une cosse de câble et/ou le deuxième contact de connexion plat (21) est formé comme une barre omnibus ou une cosse de câble.

10. Module électrique et/ou électronique (100) comprenant un ensemble de raccordement (1) selon l'une des revendications précédentes, **caractérisé en ce que** le module électrique et/ou électronique (100) comprend par ailleurs un premier composant électrique et/ou électronique (10) et un deuxième composant électrique et/ou électronique (20), le premier contact de connexion plat (11) étant formé comme une connexion électrique du premier composant électrique et/ou électronique (10) et le deuxième contact de connexion plat (21) étant formé comme une connexion électrique du deuxième composant électrique et/ou électronique (20).
